# EUROPEAN PATENT SPECIFICATION

(11) **EP 2 707 411 B1**
(45) Date of publication and mention of the grant of the patent: **30.09.2015**
(21) Application number: 12716947.2
(22) Date of filing: 13.04.2012
(51) Int. Cl.: C08G 59/24, C08G 59/22, C08L 63/00, C08G 59/42, H01B 3/40

(54) **INSULATION FORMULATIONS**
ISOLIERUNGSFORMULIERUNGEN
FORMULATIONS D'ISOLANT

(30) Priority: 13.05.2011 US 201161485841 P
(43) Date of publication of application: 19.03.2014
(73) Proprietor: Dow Global Technologies LLC, Midland, MI 48674 (US)
(72) Inventor: ESSEGHIR, Mohamed, Lawrenceville, NJ 08648 (US); HARRIS, William J., Lake Jackson, TX 77566 (US)
(74) Representative: Boult Wade Tennant
(86) International application number: PCT/US2012/033417
(87) International publication number: WO 2012/158291

(56) References cited:
- EP-A1- 1 285 938
- GB-A- 855 025
- GB-A- 966 917
- US-A- 2 982 752
- US-A- 5 189 080
- US-A1- 2006 084 727
- WORZAKOWSKA M: "Influence of Cure Schedule on the Vicoleastic Properties and Thermal Degradation of Crosslinked Mono- and Diepoxides Obtained During the Reaction of Hydrogen Peroxide and Divinylbenzene", JOURNAL OF APPLIED POLYMER SCIENCE, JOHN WILEY & SONS, INC, US, vol. 103, no. 1, 5 January 2007 (2007-01-05), pages 462-469, XP002615728, ISSN: 0021-8995, DOI: 10.1002/APP.24936 [retrieved on 2006-10-23]

## Description

### BACKGROUND OF THE INVENTION

### Field of the Invention

The present invention is related to an epoxy resin formulation and more specifically to an epoxy resin formulation useful as an insulating material for electrical apparatuses.

### Description of Background and Related Art

There are several known prior art processes related to cured filled epoxies for use as electrical insulation materials in which one property of the electrical insulation material is improved. However, heretofore nothing in the known art has successfully provided a filled epoxy resin formulation for electrical insulation materials having the requisite balance of properties such as electrical, mechanical, and thermal properties required for an operating temperature of 100 °C and higher.

US-B-2,982,752 relates to compositions comprising a polyepoxide and divinylbenzene dioxide.

GB-A-855,025 relates to a polymerizable composition comprising divinylbenzene dioxide and a polycarboxylic acid anhydride in an amount having x carboxyl equivalents per epoxy equivalent of diepoxide, wherein x is a number in the range from 0.2 to 3.0.

GB-A-966,917 relates to epoxide compositions and to the polymerising or curing of certain epoxides with certain divalent tin catalysts.

An article taken from the "Journal of Applied Polymer Science", Vol.103, no. 1, 5 January 2007, pages 462-469, discloses the influence of cure schedule on the viscoelastic properties and thermal degradation of crosslinked mono- and di-epoxides obtained during the reaction of hydrogen peroxide and divinylbenzene.

US-A-5,189,080 relates to an encapsulating resin composition for electrical and electronic components which consists of cycloaliphatic epoxy resin, a hardener, an accelerator, a filler and, sometimes, a pigment.

US-A-2006/084727 relates to an encapsulant for an optoelectronic device or optical component. The encapsulant includes a glass filler and an epoxy resin composition at a cured stage.

EP-A-1,285,938 discloses epoxy resin compositions which comprise (A) at least one cycloaliphatic epoxy resin, (B) a curing agent comprising hexahydro-4-methylphthalic anhydride, (C) at least one boron containing catalyst that is essentially free of halogen, and (D) at least one cure modifier.

Typical cured epoxy casting insulation material formulations with silica filler have a glass transition of 70-95 °C, tensile strength of 70-90 MPa, thermal conductivity of generally less than 1.0 W/mK, volume resistivity of 10¹⁵ to 10¹⁶ ohm-cm, including a number of other properties. Solid insulation materials for various end uses need a requisite balance of these properties such as the aforementioned properties. In addition, insulation materials should have processing characteristics including for example the requisite viscosity prior to cure of the epoxy formulation to be a successfully used as an insulation material for example in the field of electrical apparatuses such as power transformers.

The glass transition temperature (Tg) is an especially critical property in the insulation in that as the glass transition is approached (and subsequently passed) mechanical and thermomechanical properties, as measured through a temperature sweep using a Dynamic Mechanical Analyzer or measurement in an oven/environmental chamber at some elevated temperature or temperature ramp, such as storage modulus decrease; tensile strength decrease; electrical insulation properties such as volume resistivity and dielectric strength decrease; and coefficient of thermal linear expansion increases. The changes in the above combination of properties may lead to the premature failure of the insulation material which, in turn, leads to shorting out. For example, Journal of Applied Polymer Science, 1981, 26, 2211 describes a decrease in dielectric strength as Tg is approached in cured epoxy resins. It is also known that a decrease in tensile strength and increase in coefficient of thermal linear expansion of cured epoxy resin products occurs as Tg is approached. Increasing the Tg of an epoxy insulation material is a way to increase the use temperature (including short term higher temperature incursions) of for example a power transformer. However, as Tg is increased in cured epoxy resins, the strength of the material decreases; and thus, brittleness can increase in the insulation material making the insulation material more susceptible to cracking. As a result, cracking contributes to the failure of electrical insulation materials as evidenced by electrical shorting.

Filled epoxy formulations should have an appropriate viscosity (for example less than 20,000 mPa-s) prior to curing such that the formulations can be cast to make an article such as a power transformer. It would be useful for electrical insulation applications to develop a filled epoxy formulation having a balance properties such as processing viscosity; Tg; tensile strength; volume resistivity; dielectric breakdown strength and thermal conductivity such that the insulation with the balance of required properties such as electrical, mechanical, and thermal properties can be used at an operating temperature of 100 °C and higher.

### SUMMARY OF THE INVENTION

The present invention is directed to an epoxy curable formulation or composition of matter useful as electrical insulating material for electrical apparatuses such as power transformers. For example, the curable composition of the present invention may comprise a mixture or blend of two or more epoxy resins, wherein at least one of the epoxy resins in the mixture comprises a divinylarene dioxide; at least one anhydride hardener; at least one filler; at least one cure catalyst; and other optional materials. In one embodiment, the filler may be thermally conducting and electrically insulating.

The filled epoxy formulation of the present invention has a Tg of greater than or equal to 80 °C, a thermal conductivity of greater than 0.8 W/mK, a dielectric breakdown strength of greater than or equal to 20 kV/mm, a volume resistivity greater than 10¹⁵ ohm-cm, and a tensile strength of greater than 65 MPa providing an overall balance of mechanical, thermal, and electrical properties to utilize the formulation as electrical insulation in the application area of insulating electrical apparatuses.

In another embodiment, the formulation prior to cure, has a viscosity of less than 20,000 mPa-s at casting temperature which allows the formulation to be applied (e.g. by coating, impregnating, and/or casting) about the coils and windings of a transformer.

With the balance of processing viscosity at casting temperature and the balance of properties upon curing the formulation, the present invention provides the requisite properties for electrical insulation as well as its castability. The present invention provides an improvement over the prior art epoxy electrical insulation systems as such prior known systems are unable to be efficiently utilized in a power transformers which operate at higher temperatures.

In yet another embodiment of the present invention, a formulation may include a divinylarene dioxide such as divinylbenzene dioxide (DVBDO) for use in, for example, transformer dielectric insulation as a means to improve processability and/or physical property profile. The present invention formulation with DVBDO leads to a lower viscosity formulation and an increase in Tg that does not necessarily lead to substantive drop-off of key properties, such as strength, required in electrical apparatuses.

### DETAILED DESCRIPTION OF THE INVENTION

In its broadest scope the present invention is directed to an epoxy resin formulation composition comprising (a) at least one divinylarene dioxide; (b) at least one epoxy resin different from the divinylarene dioxide of (a); (c) at least one anhydride hardener; (d) at least one filler; and (e) at least one cure catalyst or promoter.

As a matter of convenience for the formulation compositions of the present invention, the amount of (d) filler(s) will range generally from 40 weight percent (wt %) to 90 wt % in one embodiment, from 50 wt % to 80 wt % in another embodiment, from 60 wt % to 70 wt % in still another embodiment, and from 62 wt % to 68 wt % in yet another embodiment based on the total formulation; while the combination of the (a) at least one divinylarene dioxide; (b) at least one epoxy resin other than divinylarene dioxide, (c) at least one anhydride hardener, and (e) at least one cure catalyst(s) or promoter(s) will range from 10 wt % to 60 wt % in one embodiment, from 20 wt % to 50 wt % in another embodiment, from 30 wt % to 40 wt % in still another embodiment, and from 32 wt % to 38 wt % in yet another embodiment. When optional components (f) are utilized, their weight percentage will be included in the total wt % described for portions (b), (c), (d), and (e).

In one embodiment, the divinylarene dioxide, component (a), useful in the present invention may comprise, for example, any substituted or unsubstituted arene nucleus bearing one or more vinyl oxide groups in any ring position. For example, the arene portion of the divinylarene dioxide may consist of benzene, substituted benzenes, (substituted) ring-annulated benzenes or homologously bonded (substituted) benzenes, or mixtures thereof. The divinylbenzene portion of the divinylarene dioxide may be *ortho*, *meta,* or *para* isomers or any mixture thereof. Additional substituents may consist of H₂O₂-resistant groups including saturated alkyl, aryl, halogen, nitro, isocyanate, or RO-(where R may be a saturated alkyl or aryl). Ring-annulated benzenes may consist of naphthlalene, tetrahydronaphthalene, and the like. Homologously bonded (substituted) benzenes may consist of biphenyl, diphenylether, and the like.

The divinylarene dioxide used for preparing the formulations of the present invention may be illustrated generally by general chemical Structures I-IV as follows:

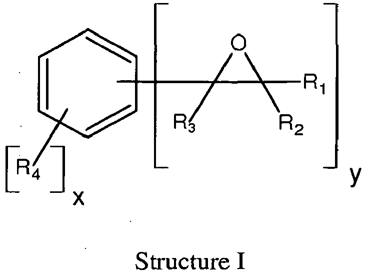

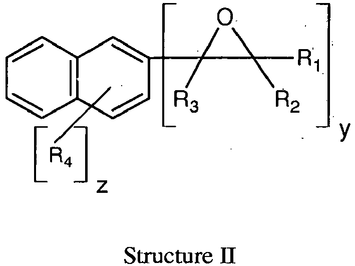

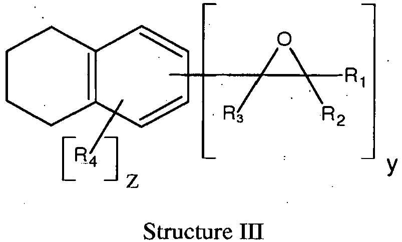

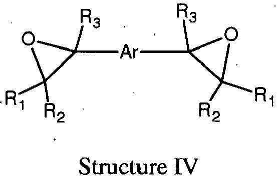

In the above Structures I, II, III, and IV of the divinylarene dioxide comonomer of the present invention, each R₁, R₂, R₃ and R₄ individually may be hydrogen, an alkyl, cycloalkyl, an aryl or an aralkyl group; or a H₂O₂-resistant group including for example a halogen, a nitro, an isocyanate, or an RO group, wherein R may be an alkyl, aryl or aralkyl; x may be an integer of 0 to 4; y may be an integer greater than or equal to 2; x+y may be an integer less than or equal to 6; z may be an integer of 0 to 6; and z+y may be an integer less than or equal to 8; and Ar is an arene fragment including for example, 1,3-phenylene group. In addition, R4 can be a reactive group(s) including epoxide, isocyanate, or any reactive group and Z can be an integer from 0 to 6 depending on the substitution pattern.

In one embodiment, the divinylarene dioxide used in the present invention may be produced, for example, by the process described in WO2010077483. The divinylarene dioxide compositions that are useful in the present invention are also disclosed in, for example, U.S. Patent No. 2,924,580.

In another embodiment, the divinylarene dioxide useful in the present invention may comprise, for example, divinylbenzene dioxide, divinylnaphthalene dioxide, divinylbiphenyl dioxide, divinyldiphenylether dioxide, and mixtures thereof.

In one embodiment of the present invention, the divinylarene dioxide used in the epoxy resin formulation may be for example divinylbenzene dioxide (DVBDO). In another embodiment, the divinylarene dioxide component that is useful in the present invention includes, for example, a divinylbenzene dioxide as illustrated by the following chemical formula of Structure V:

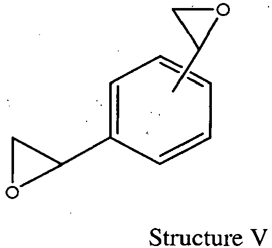

The chemical formula of the above DVBDO compound may be as follows: C₁₀H₁₀O₂; the molecular weight of the DVBDO is about 162.2; and the elemental analysis of the DVBDO is about: C, 74.06; H, 6.21; and O, 19.73 with an epoxide equivalent weight of about 81 g/mol.

Divinylarene dioxides, particularly those derived from divinylbenzene such as for example divinylbenzene dioxide (DVBDO), are class of diepoxides which have a relatively low liquid viscosity but a higher rigidity and crosslink density than conventional epoxy resins.

Structure VI below illustrates an embodiment of a chemical structure of the DVBDO useful in the present invention:

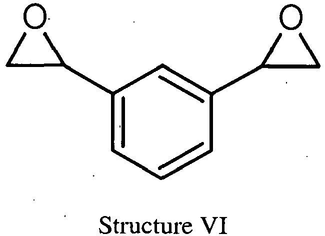

Structure VII below illustrates another embodiment of a chemical structure of the DVBDO useful in the present invention:

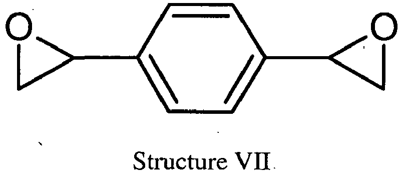

When DVBDO is prepared by the processes known in the art, it is possible to obtain one of three possible isomers: *ortho, metal,* and *para*. Accordingly, the present invention includes a DVBDO illustrated by any one of the above Structures individually or as a mixture thereof. Structures VI and VII above show the *meta* (1,3-DVBDO) isomer and the *para* (1,4-DVBDO) isomer of DVBDO, respectively. The *ortho* isomer is rare; and usually DVBDO is mostly produced generally in a range of from 9:1 to 1:9 ratio of *meta* (Structure VI) to *para* (Structure VII) isomers. The present invention includes a range of from 6:1 to 1:6 ratio of Structure VI to Structure VII in one embodiment, a ratio of Structure VI to Structure VII in the range of from 4:1 to 1:4 in another embodiment or a ratio of Structure VI to Structure VII in the range of from 2:1 to 1:2 in still another embodiment.

In yet another embodiment of the present invention, the divinylarene dioxide may contain quantities (such as for example less than 20 wt %) of substituted arenes. The amount and structure of the substituted arenes depend on the process used in the preparation of the divinylarene precursor to the divinylarene dioxide. For example, divinylbenzene prepared by the dehydrogenation of diethylbenzene (DEB) may contain quantities of ethylvinylbenzene (EVB) and DEB. Upon reaction with hydrogen peroxide, EVB produces ethylvinylbenzene monoxide while DEB remains unchanged. Additionally, the process used in the preparation divinylarene dioxide from divinylarene may contain limited amounts (for example less than 20 wt %) of the partial oxidation product of vinylarene monooxide which is an intermediate in the production of divinylarene dioxide. The presence of these compounds can increase the epoxide equivalent weight of the divinylarene dioxide to a value greater than that of the pure compound but can be utilized at levels of 0 to 99 % of the epoxy resin portion.

In one embodiment, the divinylarene dioxide, for example DVBDO, useful in the present invention comprises a low viscosity liquid epoxy resin. The viscosity of the divinylarene dioxide used in the present invention ranges generally from 0.001 Pa-s to 0.1 Pa-s in one embodiment, from 0.01 Pa-s to 0.05 Pa-s in another embodiment, and from 0.01 Pa-s to 0.025 Pa-s in still another embodiment, at 25 °C.

The concentration of the divinylarene oxide used in the present invention as a percentage of the total epoxy portion of product formulation may range generally from 1 wt % to 90 wt % in one embodiment, from 2 wt % to 75 wt % in another embodiment, from 3 wt % to 60 wt % in still another embodiment, and from 5 wt % to 50 wt % in yet another embodiment.

The divinylarene dioxide used in the present invention is used in combination with other epoxy resins known in the art such as epoxy resins described in Lee, H. and Neville, K., Handbook of Epoxy Resins, McGraw-Hill Book Company, New York, 1967, Chapter 2, pages 2-1 to 2-27. Particularly suitable other epoxy resins known in the art include for example epoxy resins based on reaction products of polyfunctional alcohols, phenols, carboxylic acids, cycloaliphatic carboxylic acids, aromatic amines, or aminophenols with epichlorohydrin. A few non-limiting embodiments include, for example, bisphenol A diglycidyl ether, bisphenol F diglycidyl ether, resorcinol diglycidyl ether, and triglycidyl ethers of para-aminophenols. Other suitable epoxy resins known in the art include for example reaction products of epichlorohydrin with phenol novolacs, hydrocarbon novolacs, and cresol novolacs. It is also possible to use a mixture of two or more other epoxy resins with the divinylarene dioxide. The other epoxy resin may also be selected from commercially available products such as for example, D.E.R. 331®, D.E.R.332, D.E.R. 354, D.E.R. 560, D.E.N. 425, D.E.N. 431, D.E.N. 438, D.E.R. 736, or D.E.R. 732 epoxy resins available from The Dow Chemical Company.

Still another embodiment of epoxy resins useful in the present invention include for example, the epoxy resins described in U.S. Patent Application Publication No. US20090186975 and WO 99/67315. For example, the epoxy resins used within the context of the present invention are aromatic and/or cycloaliphatic compounds. Epoxy resins are reactive glycidyl compounds containing at least two 1,2-epoxy groups per molecule. In one embodiment, a mixture of polyglycidyl compounds is used such as a mixture of diglycidyl- and triglycidyl- compounds.

Epoxy compounds useful for the present disclosure comprise unsubstituted glycidyl groups and/or glycidyl groups substituted with methyl groups. These glycidyl compounds may have a molecular weight between 150 and 1200 in one embodiment or between 150 and 1000 in another embodiment; and the epoxy may be solid or liquid.

One embodiment of the present invention comprises a mixture of epoxy resins wherein the mixture comprises at least one divinylarene dioxides such as for example DVBDO as a component of the mixture of epoxy molecules. The other epoxy resin(s) useful as component (b) in the mixture, may be a liquid or a solid. For example, an epoxy resin such as hydroquinone diglycidyl ether or resorcinol diglycidyl ether is a solid and can be used in the formulation of the present invention because it has a relatively low viscosity when dissolved/melted.

In one embodiment, the epoxy resin(s) other than divinylarene dioxide may include bisphenol A diglycidyl ether, bisphenol F diglycidyl ether, epoxy novolac resin, and mixtures thereof. In another embodiment, the epoxy resin(s) other than divinylarene dioxide may include for example bisphenol F diglycidyl ether, epoxy novolac resin, and mixtures thereof.

The concentration of the epoxy resin(s), other than divinylarene oxide, component (b) used in the present invention may be measured as a percentage of the total epoxy portion of product formulation. For example, the epoxy resin, component (b), may range generally from 10 wt % to 99 wt % in one embodiment, from 25 wt % to 98 wt % in another embodiment, y from 40 wt % to 97 wt % in still another embodiment, and from 50 wt % to 95 wt % in yet another embodiment.

The curing agent, component (c), useful for the curable epoxy resin formulation or composition of the present invention, may comprise any anhydride curing agent known in the art for curing epoxy resins. Anhydride curing agents can contain limited amounts of carboxylic acid(s) functionalities which also can function as a curing agent. Generally, it is desired that a predominance of the hardener used in the present invention comprise an anhydride such that the anhydride is greater than 60 percent (%) in a mixture containing carboxylic acid in one embodiment, greater than 80 % in another embodiment, greater than 90 % in still another embodiment, and greater than 97 % in yet another embodiment. The curing agents, (also referred to as a hardener or cross-linking agent) useful in the curable composition, may be selected, for example, from one or more anhydride curing agents well known in the art.

In one embodiment, the resin formulations of the present invention can be cured using for example, anhydrides and mixtures of anhydrides with other optional curing agents. The anhydride curing agent useful in the present invention may include for example, cyclic anhydrides of aromatic, aliphatic, cycloaliphatic and heterocyclic polycarbonic acids which may or may not be substituted with alkyl, alkenyl, or halogen groups. Examples of anhydride curing agents include phthalic anhydride, tetrahydrophthalic anhydride, methyl tetrahydrophthalic anhydride, hexahydrophthalic anhydride, methyl hexahydrophthalic anhydride, nadic methyl anhydride, succinic anhydride, dodecenylsuccinic anhydride, glutaric anhydride, pyromellitic anhydride, maleic anhydride, isatoic anhydride, benzophenonetetracarboxylic anhydride, and mixtures thereof. Other curing agents useful in the present invention include the anhydride curing agents described in U.S. Patent No. 6,852,415.

In one embodiment, the cyclic anhydride curing agents and mixtures thereof used in the present invention may include a liquid or a low melting solid (i.e. a solid having a melting point of less than 100 °C). For example, cyclic anhydride curing agents may include phthalic anhydride, tetrahydrophthalic anhydride, methyl tetrahydrophthalic anhydride, hexahydrophthalic anhydride, methyl hexahydrophthalic anhydride, nadic methyl anhydride, succinic anhydride, dodecenylsuccinic anhydride, glutaric anhydride, maleic anhydride, and mixtures thereof. In another embodiment, cyclic anhydride curing agents may include tetrahydrophthalic anhydride, methyl tetrahydrophthalic anhydride, hexahydrophthalic anhydride, methyl hexahydrophthalic anhydride, nadic methyl anhydride, and mixtures thereof. In still another embodiment, cyclic anhydride curing agents may include tetrahydrophthalic anhydride, methyl tetrahydrophthalic anhydride, nadic methyl anhydride, and mixtures thereof.

Generally, the amount of cyclic anhydride curing agent that can be used in the present invention may be over a range of equivalents (i.e. moles) of anhydride to epoxy. For example, the curing agent may range from 0.2 to 1.5 equivalents of anhydride groups per epoxy equivalent. In another embodiment, the range may be from 0.4 to 1.2 equivalents of anhydride groups per epoxy equivalent. In yet another embodiment, the range may be from 0.7 to 1.1 equivalents of anhydride groups per epoxy equivalent. In still another embodiment, the range may be from 0.8 to 1.0 equivalents of anhydride groups per epoxy equivalent.

The filler, component (d), useful for the composition or formulation of the present invention is used as an electrically insulating material for electrical apparatus such as power transformers. The thermomechanical performance, for example such as measured through a temperature sweep using a Dynamic Mechanical Analyzer, tensile strength, coefficient of thermal expansion and modulus, of the filled insulating material may be improved by incorporating particulate filler into the curable composition. The use of fillers can also provide other advantages such as reduced shrinkage during curing of the formulation as well as other attributes such as reduced water absorption, improved electric strength, improved environmental aging, and other attributes in a cured formulation as is known in the art.

The filler, component (d), useful for the composition or formulation of the present invention is thermally conducting and electrically insulating. By "thermally conducting and electrically insulating" with reference to a filler herein it is meant that the filler may have a thermal conductivity of greater than 0.5 W/mK and an electrical insulation value, i.e. a dielectric strength of greater than 10 kV/mm.

As aforementioned, the present invention formulation employs a divinylarene dioxide with other epoxy resins. By using divinylarene dioxide in the formulation, for example a divinylarene dioxide derived from divinylbenzene such as for example divinylbenzene dioxide (DVBDO), which has a low liquid viscosity (for example, about 0.012 Pa s at 25 °C), the amount of filler used with this epoxy resin can be increased and the resulting formulation can have improved thermomechanical and thermal conductivity properties compared to formulations containing conventional epoxy resins.

In one embodiment of the present invention wherein the formulation is useful for insulating material for dry transformers, the formulations may have a highly filled material to improve thenmomechanical properties and thermal conductivity of the cured system imparting better component reliability performance. For example, the formulation may include one or more fillers of classes such as metal oxides, metal nitrides, metal carbides, metal hydroxides, metal carbonates, metal sulfates, natural and synthetic minerals mainly silicates, and aluminum silicates; and mixtures thereof. Examples of fillers include quartz, fused silica, natural silica, synthetic silica, natural aluminum oxide, synthetic aluminum oxide, hollow fillers, aluminum trihydroxide, magnesium hydroxide, aluminum hydroxide oxide, boron nitride, aluminum nitride, silicon nitride, silicon carbide, mica, zinc oxide, aluminum nitride, mullite, wollastonite, talcum, glimmer, kaolin, bentonite, xonolit, andalusite, zeolithe, dolomite, glass powder/fibers/fabrics, other organic or inorganic particulate filler, and mixtures thereof which are either added into the formulation in their end state or formed *in-situ.*

In one embodiment, the fillers used in the present invention include quartz, fused silica, natural silica, synthetic silica, natural aluminum oxide, synthetic aluminum oxide, slate, hollow fillers, aluminum trihydroxide, magnesium hydroxide, aluminum hydroxide oxide, boron nitride, aluminum nitride, silicon nitride, silicon carbide, mica, zinc oxide, mullite, wollastonite, vermiculite, talcum, glimmer, kaolin, bentonite, xonolit, andalusite, zeolithe, dolomite, glass powder/fibers/fabrics, and mixtures thereof.

In another embodiment, the fillers used in the present invention include quartz, fused silica, natural silica, synthetic silica, natural aluminum oxide, synthetic aluminum oxide, aluminum trihydroxide, boron nitride, aluminum nitride, wollastonite, kaolin, bentonite, dolomite, glass powder/fibers/fabrics, and mixtures thereof.

In yet another embodiment, the fillers used in the present invention include quartz, natural silica, synthetic silica, natural aluminum oxide, synthetic aluminum oxide, boron nitride, aluminum nitride, wollastonite, glass powder, and mixtures thereof.

In still another embodiment, the fillers used in the present invention may be quartz.

The acceptable particle size of the filler material when used in granular form generally has an average particle size, often designated d₅₀ in the micron range, sufficient to promote a balance of acceptable processing viscosity prior to cure and to promote a balance of acceptable thermomechanical properties after cure. For example, the average particle size for granular filler may be in the range of from 0.5 µm (microns) to 500 µm in one embodiment, from 1 µm to 300 µm in another embodiment, and from 5 µm to 100 µm in still another embodiment.

The acceptable filler morphologies of the filler material useful in the present invention include shapes such as platelets, fibers, spheres, granules, needles, which may be crystalline, semi-crystalline or amorphous, or any combination thereof. These fillers with different size distributions and different shapes may be combined to have a synergistic effect on viscosity, coefficient of thermal expansion (CTE), modulus, strength, electrical and/or thermal conductivity.

The fillers utilized in the present invention can be surface treated either before incorporation in the formulation or *in-situ* during the compounding of the formulation. In one embodiment, the fillers may be treated prior to formulating with the epoxy system of the present invention.

In one embodiment of the present invention, the surface of the fillers can be treated to improve filler and polymer interaction. For example, the filler may be surface treated with silane, often referred to as silanized, and the functionality or modification of resulting filler is such that its surface is more compatible with the epoxy resin and hardener system or can react with the epoxy resin and hardener system during the epoxy curing process.

Examples of various surface treatments of the fillers include fatty acids, silane coupling agents, titanates, zirconates, aluminates, or silazane compounds. In one embodiment, the fillers may be treated by silane coupling or silane sizing agents. In general, the silane coupling agent contains at least one alkoxy group to facilitate surface treatment and optionally bonding to the inorganic filler. In another embodiment, the silane coupling agent may contain another group including for example epoxy, amine, hydroxyl, carboxyl, vinyl, allyl, hydrosilyl (i.e. SiH), or other functionalities that can react with the epoxy formulation or be compatible or miscible with the epoxy fonnulation.

In still another embodiment, the silane coupling agent may be a member of the epoxysilane class of compounds with 3-glycidoxypropyltrimethoxysilane which is commercially available from Dow Corning Corporation under the tradename Dow Coming Z-6040 Silane as one such example. Yet another embodiment of the silane treated filler may be epoxy silane treated quartz which is commercially available from Quarzwerke under the tradename SILBOND with different grades described as 126 EST, W6 EST, W12 EST, 100 EST, 600 EST, and 800 EST.

Filler loadings useful in the present invention may vary. The concentration of the filler present in the formulation of the present invention may be generally from 40 wt % to 90 wt % in one embodiment, from 50 wt % to 80 wt % in another embodiment, from 60 wt % to 70 wt % in still another embodiment, and from 62 wt % to 68 wt % in yet another embodiment, based on the weight of the composition.

The composition of the present invention advantageously may use a wide array of hardeners. In addition, because the present system also allows high filler loading, the system can achieve a lower CTE below the glass transition of the cured formulation, for example, less than 70 ppm/°C in one embodiment, below 60 ppm/°C in another embodiment, and below 50 ppm/°C in still another embodiment; and/or the present system may exhibit a better thermal conductivity, for example greater than 0.8 W/mK in one embodiment, greater than 0.9 W/mK in another embodiment, and greater than 1.0 W/mK in still another embodiment.

In preparing the curable resin formulation of the present invention, at least one cure catalyst may be used to facilitate the reaction of the epoxy resins (i.e., the divinylarene dioxide compound and the epoxy resin other that divinylarene dioxide) with the curing agent. The cure catalyst useful in the present invention may include for example, nucleophilic catalysts, tertiary amines, amine complexes, urea derivatives, imidazoles, substituted imidazoles, Lewis bases having the ability to catalyze curing, and mixtures thereof. Depending on the catalyst and reaction conditions the catalyst can optionally co-react into the formulation.

The catalyst, component (e), useful in the present invention may include catalysts well known in the art, such as for example, catalyst compounds containing amine, phosphine, heterocyclic nitrogen, ammonium, phosphonium, arsonium, sulfonium moieties, and any combination thereof. Some non-limiting examples of the catalyst of the present invention may include, for example, ethyltriphenylphosphonium; berizyltrimethylammonium chloride; heterocyclic nitrogen-containing catalysts described in U.S. Patent No. 4,925,901; imidazoles; triethylamine; and any combination thereof.

The selection of the catalyst useful in the present invention is not limited and commonly used catalysts for epoxy systems can be used. Also, the addition of a catalyst may depend on the system prepared. Examples of catalyst may include tertiary amines, imidazoles, substituted imidazoles, 1-alkylsubstituted or 1-arylsubstituted imidazoles, organo-phosphines, and acid salts.

In another embodiment, catalysts may include tertiary amines such as, for example, triethylamine, tripropylamine, tributylamine, 1-methylimidazole, benzyldimethylamine, mixtures thereof and the like.

The concentration of the catalyst used in the present invention in the organic portion of the formulation may range generally from 0.005 wt % to 2 wt % in one embodiment, from 0.01 wt % to 1.5 wt % in another embodiment, from 0.1 wt % to 1 wt % in still another embodiment, and from 0.2 wt % to 0.8 wt % in yet another embodiment. Epoxy formulation concentrations of the catalyst below 0.005 wt %, the curing of the formulation would be too slow and epoxy formulation concentrations of the catalyst above 2 wt %, the curing would be too fast, i.e., it would shorten pot life/time for casting. Concentrations outside the above for the catalyst may also change the network and nature of crosslink and additionally further influence the degree that other moieties like hydroxyls can start participating in curing and network formation; and a possible change in the network could influence some of the properties of the resulting cured product.

Other optional components that may be useful in the present invention are components normally used in resin formulations known to those skilled in the art. For example, the optional components may comprise compounds that can be added to the composition to enhance application properties (e.g. surface tension modifiers or flow aids), reliability properties (e.g. adhesion promoters, compatibilizing agents, and surface treatment agents), release agents (e.g. mold release), the reaction rate, the selectivity of the reaction, and/or the catalyst lifetime. For example, accelerators are hydrogen donating compounds for example with hydroxyl groups and include materials like phenolic compounds, benzyl alcohol, glycols, and polyglycols that can donate hydrogen or hydrogen bond and contribute to an increased rate of cure.

An assortment of additives may be added to the compositions of the present invention including for example, other resins such as epoxy resins that are different from the divinylarene dioxide, component (a) and that are different from component (b), reactive diluents, non-reactive diluents, toughening agents, flexibilizers, thixotropic agents, stabilizers, plasticizers, catalyst de-activators, and the like; and mixtures thereof.

Other additives useful in the formulation of the present invention include for example, a halogen containing or halogen free flame retardant; a synergist to improve the performance of the flame extinguishing ability such magnesium hydroxide, zinc borate, or metallocenes; a solvent for processability including for example acetone, methyl ethyl ketone, an Dowanol PMA; adhesion promoters such as modified organosilanes (epoxidized, methacryl, amino), acetylacetonates, or sulfur containing molecules; wetting and dispersing aids such as modified organosilanes, Byk 900 series and Byk W-9010, modified fluorocarbons; air release additives such as Byk-A 530, Byk-A 525, Byk-A 555, Byk-A 560; surface modifiers such as slip and gloss additives (a number of which are available from Byk-Chemie, and mixtures thereof.

The concentration of the additives used in the present invention may range generally from 0 wt % to 10 wt % in one embodiment, from 0.01 wt % to 5 wt % in another embodiment, from 0.1 wt % to 2.5 wt % in still another embodiment, and from 0.5 wt % to 1 wt % in yet another embodiment, based on the total weight of the composition.

The process for preparing a composition of matter epoxy formulation useful as insulating material for dry transformers includes blending (a) at least one divinylarene dioxide; (b) at least one epoxy resin other than divinylarene dioxide, (c) at least one anhydride hardener; (d) at least one filler, (e) at least one cure catalyst, and (f) optionally, other ingredients as desired. For example, the preparation of the curable epoxy resin formulation of the present invention is achieved by blending with or without vacuum in a Ross PD Mixer (Charles Ross), a FlackTek Speedmixer or other mixer known in the art that wets out the filler with and distributes evenly the resin components (a)-(f) above. The above mentioned elements can generally be added in most any sequence, various combinations, and various times of additions as is convenient and desired. For example, to lengthen pot-life the cure catalyst (e) maybe added last or at later time during mixing and optional degassing, but prior to casting the formulation. Any of the above-mentioned optional assorted formulation additives, for example an additional epoxy resin, may also be added to the composition during the mixing or prior to the mixing to form the composition.

In one embodiment, one or more of the components (a)-(f) above of the formulation may be premixed. For example, the catalyst may be premixed in the hardener or the flexibilizer and then the premixed components may be added into the formulation.

For the formulations of the present invention, degassing of the formulation is an important element in the mechanical and/or electrical performance of the insulation material of the present invention. Typically, the degassing may be carried out by application of vacuum in some mixing apparatus for the formulation, including the individual components. The range of vacuums, ramps and steps of vacuums, and timing of vacuum application to effectively degas a formulation prior to casting and curing depends on a variety of factors as is known in the art which relate for example to the temperature, viscosity of the formulation, mass of formulation, degassing vessel geometry and its quality of mixing and the like. In general, it is desired that vacuum is applied at some point during the mixing of resin components (a)-(f) above and vacuum is defined as anything less than atmospheric pressure. Degassing may occur in the same or separate devices and/or vessels as may be used to initially mix any of the components (a)-(f). Mixing or agitation is normally performed when degassing. Most any vacuum can be applied, but rate of degassing improves as lower vacuums are utilized. Degassing is generally done at less than 200 millibar in one embodiment, less than 100 millibar in another embodiment, less than 50 millibar in still another embodiment, and less than 20 millibar in yet another embodiment. In generally some lower limit of applied vacuum may be used for both economic considerations and the desire to minimize volatilization of a component which depends on the component and the temperature of the component. In one embodiment, the vacuum to be utilized in degassing may be more than 0.5 millibar and more than 1 millibar in another embodiment.

All the components of the epoxy resin formulation are typically mixed and dispersed; optionally degassed; and transferred at a temperature enabling the preparation of an effective epoxy resin composition having the desired balance of properties for example as required for using the composition in transformers applications. The temperature during the mixing and optional degassing of all components, as well as the temperature of the mixture when transferred to a device or mold (i.e. casting temperature) may be generally from 10 °C to 110 °C in one embodiment, from 20 °C to 90 °C in another embodiment, and from 40 °C to 75 °C in still another embodiment. Lower mixing temperatures help to minimize reaction of the resin and hardener components to maximize the pot life of the formulation, but higher mixing temperatures in the short term can lower the formulation viscosity and facilitate mixing, degassing, and transfer of the formulation before being cured.

In general, the viscosity of the complete epoxy resin formulation at the transfer or casting temperature can be any viscosity value at which the formulation flows, as known in the art. In one embodiment for example, the viscosity of the complete epoxy resin formulation may be less than 20,000 mPa-s, less than 15,000 mPa-s in another embodiment, and less than 10,000 mPa-s in still another embodiment. Generally, the viscosity of the complete epoxy resin formulation is from 200 mPa-s to 20,000 mPa-s in one embodiment.

It is generally desired that the complete formulation of the present invention be mixed, degassed, and transferred to be cured in the shape or apparatus that the insulation material will be generally used in less than 2 days in one embodiment, less than 1 day in another embodiment, and less than 12 hours in still another embodiment when held at ambient temperature (25 °C) up to 60 °C. As known in the art, the pot life (or shelf life) of a complete formulation is dependent not just on the temperature at which the formulation is held but also on the amount and type of catalyst that is included in the formulation with lower concentration of catalyst typically extending the pot life of the formulation. For extended pot life or shelf life, the blended compound formulation is typically stored at sub-ambient temperatures to maximize shelf life and optionally without containing catalyst. Acceptable temperature ranges for storage include for example from -100 °C to 25 °C in one embodiment, from -70 °C to 10 °C in another embodiment, and from -50 °C to 0 °C in still another embodiment. As an illustration of one embodiment, the temperature of storage may be about -40 °C. However, it may be beneficial to start transferring the complete and degassed formulation immediately, rather than storing, to be cured in the shape or apparatus that the insulation material will be generally used in.

The blended formulation can then be applied to a substrate via a number of methods for the insulating material for an electrical apparatus such as a power transformer application. For example, typical application methods include vacuum casting, automated pressure gellation (APG), filament winding, vacuum pressure impregnation, resin encapsulated, solid cast, and the like as known to those skilled in the art. A "substrate" herein includes for example a coil of a dry-type transformer, rod composites for outdoor insulators for power lines, elements in outdoors power switches, over-voltage protection devices, electrical machines, coated elements of a transistor, other semi-conductor devices, and/or impregnated electrical components, and the like.

The curing of the thermosettable composition may be carried out at a predetermined temperature and for a predetermined period of time and in a series of temperature ramps and temperature steps sufficient to cure the composition. The curing of the formulation may be dependent on the hardeners used in the formulation. Using more than one temperature step in the curing of the formulation in which some of the steps only partially cure or gel the formulation are hypothesized to facilitate the development of properties of the fully cured formulation. Such a temperature stepped process is hypothesized to better manage the homogeneity, shrinkage, and stresses that occur during the cure of the formulations of the present invention and can lead to a more consistent or better electrically and/or mechanically performing insulation material for electrical apparatuses including power transformers. Whatever the cure profile, it is generally recognized by those skilled in the art that the final cure temperature should generally exceed the glass transition temperature, Tg, of a fully cured epoxy/hardener system. After curing or post-curing the composition, the process may include a controlled cooling that may include single or multiple temperature ramps and temperature steps to minimize the development of stress and possible defects in the electrical insulating, thermally conductive cured material.

For example, the temperature of curing or series of one or more curing steps for the formulation may be generally from 10 °C to 300 °C in one embodiment; from 50 °C to 250 °C in another embodiment; and from 80 °C to 225 °C in still another embodiment; and the curing time may be chosen between 1 minute to 96 hours in one embodiment, between 1 hour to 72 hours in another embodiment, and between 4 hours to 48 hours in still another embodiment. Below a period of time of 1 minute, the time may be too short to ensure sufficient reaction under conventional processing conditions; and above 96 hours, the time may be too long to be practical or economical. The size and shape of cured epoxy formulation as well as the components of the epoxy formulation play a role in the cure profiles utilized as known to those skilled in the art.

In one embodiment, it is advantageous to partially cure or gel the composition at a first temperature step or ramp of from 50 °C to 150 °C; and then carry out at least one further heating step or ramp of from 120°C to 300 °C. In one embodiment, the curing stage of the composition may be carried out in at least two steps including for example a first curing step at a temperature of from 70 °C to 100 °C and a second curing step at a temperature of from 130 °C to 150 °C. In another embodiment, a third curing step can be used after the above first and second steps wherein the temperature of the third step is from about from 175 °C to 250 °C. In any of the steps/ramps described above, the time of heating at the desired temperature can be from 5 minutes to 96 hours.

If the formulation or composition is cured too fast or at a temperature too high for a particular temperature step or ramp then it may be more likely to result in decreased performance of the insulation material as well as the device in which the insulation material is utilized. Decreased performance can arise from, but is not limited to, defects in the resulting cured composition which can lead to decreased performance or failure in the formulation or the device in which the formulation is utilized. Examples of such defects include cracks, bubbles, substantive uneven distribution of filler(s), and the like.

Any one or more divinylarene dioxide epoxy resins of the present invention may be used as one of the components in the final formulation. The divinylarene dioxide used as the epoxy resin component in one embodiment may be divinylbenzene dioxide (DVBDO). For example, it is highly desirable that the DVBDO epoxy resin may be used as an additive diluent that lowers formulation viscosity. The use of DVBDO imparts improved properties to the curable composition and the final cured product over conventional epoxies such as glycidyl ether, glycidyl ester, or glycidyl amine epoxy resins. The DVBDO's unique combination of low viscosity in the uncured state, and high Tg after cure due to the rigid DVBDO molecular structure and increase in cross-linking density, enables a formulator to apply new formulation strategies. In addition, the ability to cure the DVBDO containing epoxy resin formulation with an expanded hardener range, offers the formulator significantly improved formulation latitude over other types of epoxy resins such as epoxy resins of the cycloaliphatic type resins (e.g., ERL-4221, formerly from The Dow Chemical Company).

The thermoset product (i.e. the cross-linked product made from the curable composition of the present invention) that forms the insulating material of the present invention shows several improved properties over conventional epoxy cured resins. One advantage of the cured product of the present invention is that such cured product has an overall balance of mechanical, thermal, and electrical properties to utilize the formulation as electrical insulation for example in the application area of insulating electrical apparatuses.

For example, the cured product of the present invention may have a glass transition temperature (Tg) of from 80 °C to 250 °C. Generally, the Tg of the resin is higher than 100 °C in one embodiment, higher than 120 °C in another embodiment, higher than 140 °C in still another embodiment, and higher than 150 °C in yet another embodiment.

In addition, the thermoset product of the present invention exhibits a coefficient of thermal expansion (CTE) below the Tg as determined by ASTM D 5335 to be generally, from 1 ppm/°C to 75 ppm/°C in one embodiment. In another embodiment, the CTE may be less than 75 ppm/°C, less than 60 ppm/°C in another embodiment, and less than 45 ppm/°.C in yet another embodiment.

In addition, the thermoset product of the present invention may also have a thermal conductivity of generally from 0.5 W/mK to 50 W/mK in one embodiment. In another embodiment, the thermal conductivity may be greater than 0.8 W/mK, greater than 0.9 W/mK in another embodiment, and greater than 1.0 W/mK in yet another embodiment.

The thermoset product of the present invention can also have a dielectric breakdown strength of generally from 10 kV/mm to 45 kV/mm in one embodiment. In another embodiment, the dielectric breakdown strength may be greater than or equal to 20 kV/mm, greater than 23 kV/mm in another embodiment, and greater than 27 kV/mm in yet another embodiment.

Another property that the thermoset product of the present invention can have is a volume resistivity generally from 1x10¹² ohm-cm to 1x10¹⁹ ohm-cm in one embodiment. In another embodiment, the volume resistivity may be greater than 1x10¹⁵ ohm-cm, greater than 4x10¹⁵ ohm-cm in another embodiment, and greater than 1x10¹⁶ ohm-cm in yet another embodiment.

Still another property that the thermoset product of the present invention can have is a tensile strength of generally from 40 MPa to 250 MPa in one embodiment. In another embodiment, the tensile strength may be greater than 65 MPa, greater than 75 MPa in another embodiment, and greater than 85 MPa in yet another embodiment.

The above properties provide the thermoset product of the present invention with an overall balance of mechanical, thermal, and electrical properties to utilize the formulation as electrical insulation in the application area of insulating electrical apparatuses. The thermoset product of the present invention advantageously exhibits the above balance of properties at an operating temperature of from 70 °C to 250 °C in one embodiment. In another embodiment, the operating temperature is greater than or equal to 70 °C, greater than or equal to 100 °C in still another embodiment, greater than or equal to 130 °C in yet another embodiment, and greater than or equal to 150 °C in yet another embodiment.

The epoxy resin formulation of the present invention is used as a curable composition to manufacture an electrical insulating material for transformers, potting applications, switches, transducers, bushings, sensors, converters, transistors, electrical machines, electrical devices, and the like.

### EXAMPLES

The following examples and comparative examples further illustrate the present invention in detail but are not to be construed to limit the scope thereof.

Various terms and designations used in the following examples are explained herein below:
D.E.R. 332 is an epoxy resin that is a diglycidyl ether of bisphenol A having an EEW of 171, commercially available from The Dow Chemical Company.
D.E.R. 383 is an epoxy resin that is a diglycidyl ether of bisphenol A having an EEW of 180.3, commercially available from The Dow Chemical Company.
D.E.N 425 is an epoxy resin having an EEW of 172, commercially available from The Dow Chemical Company.
SILBOND® W12EST is an epoxy silane treated quartz with d_{50%} grain size of 16 µm (microns), commercially available from Quarzwerke.
MILLISIL® W12 is a quartz with d_{50%} grain size of 16 µm (microns), commercially available from Quarzwerke.
"DVBDO" stands for divinylbenzene dioxide.
"NMA" stands for nadic methyl anhydride, and is commercially available from Polysciences.
"ECA100" stands for Epoxy Curing Agent 100 and is commercially available from Dixie Chemical. ECA100 generally comprises methyltetrahydrophthalic anhydride greater than 80% and tetrahydrophthalic anhydride greater than 10%.
"1MF" stands for 1-methylimidazole, and is commercially available from Aldrich Chemical.

The following standard analytical equipments and methods are used in the Examples:

### Mold Assembly

Onto two ∼355 mm square metal plates with angled cuts on one edge is secured on each DUOFOIL™ (∼330 mm x 355 mm x ∼0.38 mm). A U-spacer bar of ∼3.05 mm thickness and silicone rubber tubing with ∼3.175 mm ID x ∼ 4.75 mm OD (used as gasket) are placed between the plates and the mold is held closed with C-clamps. Mold is pre-warmed in about 65 °C oven prior to its use.

### Filled Epoxy Resin Casting

The requisite amount of filler is dried overnight in a vacuum oven at a temperature of ∼70 °C. The epoxy resin and anhydride hardener are separately pre-warmed to ∼60 °C. Into a wide mouth plastic container is loaded the designated amount of warm epoxy resin, warm anhydride hardener, and 1-methyl imidazole which are hand swirled before adding in the warm filler. The container's contents are then mixed on a FlackTek SpeedMixer™ with multiple cycles of ∼1-2 minutes duration from 800 rpm to 2350 rpm.

The mixed formulation is loaded into a temperature controlled ∼500 mL resin kettle with overhead stirrer using glass stir-shaft and bearing with Teflon® blade along with a vacuum pump and vacuum controller for degassing. A typical degassing profile is performed between 55 °C and 75 °C with the following stages: 5 minutes, 80 rpm, 100 Torr; 5 minutes, 80 rpm, 50 Torr; 5 minutes, 80 rpm, 20 Torr with N₂ break to ∼760 Torr; 5 minutes, 80 rpm, 20 Torr with N₂ break to ∼760 Torr; 3 minutes, 80 rpm, 20 Torr; 5 minutes, 120 rpm, 10 Torr; 5 minutes, 180 rpm, 10 Torr; 5 minutes, 80 rpm, 20 Torr; and 5 minutes, 80 rpm, 30 Torr.

Warm, degassed mixture is brought to atmospheric pressure and poured into the warm mold assembly described above. The filled mold is placed in an 80 °C oven for about 16 hours with temperature subsequently raised and held at 140 °C for a total of 10 hours; then subsequently raised and held at 225 °C for a total of 4 hours; and then slowly cooled to ambient temperature (about 25 °C).

### Glass Transition Temperature (T_{g}) Measurements

A portion of the cured epoxy formulation is placed in a differential scanning calorimeter (DSC) with heating and cooling at 10 °C/minute at a first heating scan of from 0 °C to 250 °C to a second heating scan of from 0 °C to 250 °C. Tg is reported as the half-height value on the second heating scan of from 0 °C to 250 °C.

### Tensile Property Measurements

Tensile property measurements are made on the cured epoxy formulation according to ASTM D638 using a Type 1 tensile.

### Thermal Conductivity Measurements

Thermal conductivity measurements are made on the cured epoxy formulation according to ISO 22007-2 (the transient plane heat source (hot disc) method).

### Volume Resistivity

Volume Resistivity was measured at room temperature on a Hewlett-Packard High Resistivity Meter, plaque thickness ranged from 2.9 to 3.3 mm (115 to 130 mils).

### Dielectric Strength

Dielectric strength was also measured on 2.9 to 3.3 mm (115-130 mil) plaques using an AC breakdown Tester per ASTM D149 with ramp-up voltage rate of 500V/sec until sample breakdown.

### Example 1-6 and Comparative Examples A and B

Filled epoxy resin castings are prepared using the general method as described above and the formulations described in Table I below. The properties of the resulting castings are measured by the methods described above and the property results are described in Table II below.

**Table I - FORMULATION COMPOSITIONS**

| EXAMPLE | Epoxy (g) | 1MI (g) | NMA (g) | ECA100 (g) | Quartz (g) |
|---|---|---|---|---|---|
| Comparative A | 67.4^{a} | 0.67 | 63.8 | -- | 218.75^{#} |
| Comparative B | 77.05^{a} | 0.77 | 72.95 | -- | 250.0^{$} |
| Example 1 | 49.25^{b} | 0.73 | 68.96 | -- | 218.75^{$} |
| | 12.31^{d} | | | | |
| Example 2 | 58.83^{c} | 0.90 | 84.93 | -- | 265.63^{$} |
| | -14.71^{d} | | | | |
| Example 3 | 69.64^{c} | 0.86 | 81.13 | -- | 265.63^{$} |
| | 7.74^{d} | | | | |
| Example 4 | 75.49^{c} | 0.83 | 79.07 | -- | 265.63^{$} |
| | 3.97^{d} | | | | |
| Example 5 | 64.45^{c} | 0.79 | 36.04 | 36.04 | 280.5^{$} |
| | 7.16^{d} | | | | |
| Example 6 | 69.83^{c} | 0.77 | 35.11 | 35.11 | 280.5^{$} |
| | 3.68^{d} | | | | |

| | | | | | |
|---|---|---|---|---|---|
| ^{a}. D.E.R. 332 ^{$}. SILBOND® W12EST ^{b}. D.E.R. 383 ^{#}. MILLISIL® W12 ^{c}. D.E.N. 425 ^{d}. DVBDO | | | | | |

**Table II - FORMULATION PROPERTIES**

| EXAMPLE | Tg °C 2^{nd} Heat | Tensile Strengt, h (MPa) | Tensile Modulus (MPa) | Elongation- to-break % E_{b} | Thermal Conductivity (W/mK) | Volume Resistivity (Ohm-cm) | Dielectric Breakdown Strength (kV/mm) |
|---|---|---|---|---|---|---|---|
| Comparative A | 190 | 53.5 | 11263 | 0.62 | 0.963 | 5.14E+15 | 27.9 |
| Comparative B | 186 | 68.3 | 11508 | 0.84 | 0.973 | 4.36E+15 | 29.4 |
| Example 1 | 202 | 70.4 | 11651 | 0.86 | 1.012 | 1.08E+16 | 27.4 |
| Example 2 | 199 | 78.8 | 12476 | 0.89 | -- | 1.88E+16 | 33.3 |
| Example 3 | 191 | 76.7 | 13176 | 0.92 | 0.942 | 1.41E+16 | 31.0 |
| Example 4 | 182 | 74.4 | 12745 | 0.86 | -- | 7.89E+16 | 31.8 |
| Example 5 | 167 | 93.9 | 15227 | 1.03 | -- | 3.54E+16 | 31.7 |
| Example 6 | 159 | 93.0 | 13860 | 1.01 | -- | 1.58E+16 | 30.2 |

## Claims

1. A curable epoxy resin formulation composition as electrical insulation for an electrical apparatus comprising (a) at least one divinylarene dioxide; (b) at least one epoxy resin different from the divinylarene dioxide of component (a); (c) at least one anhydride hardener; (d) at least one filler, wherein the filler is a thermally conducting and electrically insulating filler; and (e) at least one cure catalyst; wherein the epoxy resin formulation composition upon curing provides a cured product with a balance of properties comprising a Tg of at least 80 °C, a tensile strength of at least 65 MPa, a dielectric strength of at least 20 kV/mm, and a volume resistivity of at least 5E+15 ohm cm.

2. The epoxy resin formulation composition of claim 1, wherein the filler comprises a filler treated with a filler treatment.

3. The epoxy resin formulation composition of claim 2, wherein the filler comprises a filler treated with a silane.

4. The epoxy resin formulation composition of claim 1, including a reactive diluent, a flexibilizing agent, a processing aide, or a toughening agent.

5. The epoxy resin formulation composition of claim 1, wherein the composition has a viscosity at casting temperature of from 200 mPa-s to less than 20,000 mPa-s.

6. A process for preparing a curable epoxy resin formulation composition as electrical insulation for an electrical apparatus comprising admixing (a) at least one divinylarene dioxide; (b) at least one epoxy resin different from the divinylarene dioxide of component (a); (c) at least one anhydride hardener; (d) at least one filler, wherein the filler is a thermally conducting and electrically insulating filler; and (e) at least one cure catalyst; wherein the epoxy resin formulation composition upon curing provides a cured product with a balance of properties comprising Tg, tensile strength, dielectric strength, and volume resistivity.

7. A process for preparing an epoxy insulating material for electrical apparatus comprising the steps of:
(i) providing a composition of claim 1;
(ii) applying the composition of claim 1 to a substrate; and
(iii) curing the substrate and composition to form an insulation material;
wherein the resulting insulation material has a balance of required properties including electrical, mechanical, and thermal properties required for an operating temperature of greater than or equal to about 70 °C.

8. A product made by the process of claim 7.

9. The product of claim 8, wherein the product comprises an insulation material, a potting material, or a casting material with a balance of properties including electrical, mechanical, and thermal properties required for an operating temperature of greater than or equal to 70 °C.

10. The product of claim 8, wherein the product comprises an electrical apparatus.

11. The product of claim 10, wherein the electrical apparatus comprises a power transformer.

12. The product of claim 10, wherein the electrical apparatus comprises a dry transformer.

## Patentansprüche

1. Eine aushärtbare Epoxidharzformulierungszusammensetzung als elektrische Isolierung für ein elektrisches Gerät, beinhaltend (a) mindestens ein Divinylarendioxid; (b) mindestens ein Epoxidharz, das sich von dem Divinylarendioxid der Komponente (a) unterscheidet; (c) mindestens einen Anhydridhärter; (d) mindestens einen Füllstoff, wobei der Füllstoff ein thermisch leitender und elektrisch isolierender Füllstoff ist; und (e) mindestens einen Aushärtungskatalysator; wobei die Epoxidharzformulierungszusammensetzung beim Aushärten ein ausgehärtetes Erzeugnis mit einer Ausgewogenheit an Eigenschaften, die eine Tg von mindestens 80 °C, eine Zugfestigkeit von mindestens 65 MPa, eine Durchschlagfestigkeit von mindestens 20 kV/mm und einen spezifischen Durchgangswiderstand von mindestens 5E+15 Ohm cm beinhalten, bereitstellt.

2. Epoxidharzformulierungszusammensetzung gemäß Anspruch 1, wobei der Füllstoff einen Füllstoff beinhaltet, der mit einer Füllstoffbehandlung behandelt worden ist.

3. Epoxidharzformulierungszusammensetzung gemäß Anspruch 2, wobei der Füllstoff einen Füllstoff beinhaltet, der mit einem Silan behandelt worden ist.

4. Epoxidharzformulierungszusammensetzung gemäß Anspruch 1, die einen Reaktivverdünner, ein Weichmachmittel, eine Verarbeitungshilfe oder einen Elastifikator umfasst.

5. Epoxidharzformulierungszusammensetzung gemäß Anspruch 1, wobei die Zusammensetzung eine Viskosität bei Gießtemperatur von 200 mPa•s bis weniger als 20 000 mPa•s aufweist.

6. Ein Verfahren zum Herstellen einer aushärtbaren Epoxidharzformulierungszusammensetzung als elektrische Isolierung für ein elektrisches Gerät, beinhaltend das Vermischen (a) mindestens eines Divinylarendioxids; (b) mindestens eines Epoxidharzes, das sich von dem Divinylarendioxid der Komponente (a) unterscheidet; (c) mindestens eines Anhydridhärters; (d) mindestens eines Füllstoffs, wobei der Füllstoff ein thermisch leitender und elektrisch isolierender Füllstoff ist; und (e) mindestens eines Aushärtungskatalysators; wobei die Epoxidharzformulierungszusammensetzung beim Aushärten ein ausgehärtetes Erzeugnis mit einer Ausgewogenheit an Eigenschaften, die eine Tg, eine Zugfestigkeit, eine Durchschlagfestigkeit und einen spezifischen Durchgangswiderstand beinhalten, bereitstellt.

7. Ein Verfahren zum Herstellen eines Epoxidisoliermaterials für elektrische Geräte, beinhaltend die folgenden Schritte:
(i) Bereitstellen einer Zusammensetzung gemäß Anspruch 1;
(ii) Aufbringen der Zusammensetzung gemäß Anspruch 1 auf ein Substrat; und
(iii) Aushärten des Substrats und der Zusammensetzung, um ein Isolationsmaterial zu bilden;
wobei das resultierende Isolationsmaterial eine Ausgewogenheit an erforderlichen Eigenschaften aufweist, die elektrische, mechanische und thermische Eigenschaften umfassen, welche für eine Betriebstemperatur von mehr als oder gleich etwa 70 °C erforderlich sind.

8. Ein mittels des Verfahrens gemäß Anspruch 7 gefertigtes Erzeugnis.

9. Erzeugnis gemäß Anspruch 8, wobei das Erzeugnis ein Isolationsmaterial, ein Vergussmaterial oder ein Gussmaterial mit einer Ausgewogenheit an Eigenschaften beinhaltet, die elektrische, mechanische und thermische Eigenschaften umfassen, welche für eine Betriebstemperatur von mehr als oder gleich etwa 70 °C erforderlich sind.

10. Erzeugnis gemäß Anspruch 8, wobei das Erzeugnis ein elektrisches Gerät beinhaltet.

11. Erzeugnis gemäß Anspruch 10, wobei das elektrische Gerät einen Leistungstransformator beinhaltet.

12. Erzeugnis gemäß Anspruch 10, wobei das elektrische Gerät einen Trockentransformator beinhaltet.

## Revendications

1. Une composition de formulation à résine époxy durcissable comme isolant électrique pour un appareil électrique comprenant (a) au moins un dioxyde de divinylarène ; (b) au moins une résine époxy différente du dioxyde de divinylarène du constituant (a) ; (c) au moins un durcisseur anhydride ; (d) au moins une charge, la charge étant une charge thermiquement conductrice et électriquement isolante ; et (e) au moins un catalyseur de durcissement ; où la composition de formulation à résine époxy fournit au durcissement un produit durci avec un équilibre de propriétés comprenant une Tg d'au moins 80 °C, une résistance à la traction d'au moins 65 MPa, une rigidité diélectrique d'au moins 20 kV/mm, et une résistivité volumique d'au moins 5E+15 ohm cm.

2. La composition de formulation à résine époxy de la revendication 1, où la charge comprend une charge traitée avec un traitement de charge.

3. La composition de formulation à résine époxy de la revendication 2, où la charge comprend une charge traitée avec un silane.

4. La composition de formulation à résine époxy de la revendication 1, incluant un diluant réactif, un agent plastifiant, un auxiliaire de transformation, ou un agent de trempe.

5. La composition de formulation à résine époxy de la revendication 1, où la composition a une viscosité à la température de coulée allant de 200 mPa-s à moins de 20 000 mPa-s.

6. Un procédé pour préparer une composition de formulation à résine époxy durcissable comme isolant électrique pour un appareil électrique comprenant le fait d'associer dans un mélange (a) au moins un dioxyde de divinylarène ; (b) au moins une résine époxy différente du dioxyde de divinylarène du constituant (a) ; (c) au moins un durcisseur anhydride ; (d) au moins une charge, la charge étant une charge thermiquement conductrice et électriquement isolante ; et (e) au moins un catalyseur de durcissement ; où la composition de formulation à résine époxy fournit au durcissement un produit durci avec un équilibre de propriétés comprenant la Tg, la résistance à la traction, la rigidité diélectrique, et la résistivité volumique.

7. Un procédé pour préparer un matériau isolant époxy pour un appareil électrique comprenant les étapes consistant à :
(i) fournir une composition de la revendication 1 ;
(ii) appliquer la composition de la revendication 1 sur un substrat ; et
(iii) faire durcir le substrat et la composition afin de former un matériau d'isolation ;
où le matériau d'isolation résultant présente un équilibre de propriétés requises incluant des propriétés électriques, mécaniques, et thermiques requises pour une température de fonctionnement supérieure ou égale à environ 70 °C.

8. Un produit réalisé grâce au procédé de la revendication 7.

9. Le produit de la revendication 8, où le produit comprend un matériau d'isolation, un matériau d'enrobage, ou un matériau de coulée avec un équilibre de propriétés incluant des propriétés électriques, mécaniques, et thermiques requises pour une température de fonctionnement supérieure ou égale à 70 °C.

10. Le produit de la revendication 8, où le produit comprend un appareil électrique.

11. Le produit de la revendication 10, où l'appareil électrique comprend un transformateur de puissance.

12. Le produit de la revendication 10, où l'appareil électrique comprend un transformateur sec.
